# FASCICULE DE BREVET EUROPEEN

(11) **EP 0 475 861 B1**
(45) Date de publication et mention de la délivrance du brevet: **23.03.1994**
(21) Numéro de dépôt: 91420316.1
(22) Date de dépôt: 09.09.1991
(51) Int. Cl.: B65D 17/28

(54) **Couvercles de boîtes métal-matière plastique avec préincision thermique du film plastique et procédé d'obtention**
Deckel aus Metall und Kunststoff für Dosen mit thermisch hergestellter Sollbruchstelle der Kunststoffschicht sowie Herstellungsverfahren dafür
Metal-plastic box covers with thermal preincision of plastic layer and manufacturing process

(30) Priorité: 10.09.1990 FR 9011634
(43) Date de publication de la demande: 18.03.1992
(73) Titulaire: PECHINEY RECHERCHE (Groupement d'Intérêt Economique régi par l'Ordonnance du 23 Septembre 1967), 92400 Courbevoie la Défense 5 (FR)
(72) Inventeur: Layre, René, F-38100 Grenoble (FR); Terroni, Serge, F-38490 Les Abrets (FR)
(74) Mandataire: Séraphin, Léon

(56) Documents cités:
- EP-A- 0 065 417
- DE-A- 2 023 923
- DE-A- 2 116 343
- FR-A- 2 219 478

## Description

L'invention concerne des couvercles de boîtes à ouverture facile pour denrées alimentaires selon le préambule de la revendication 1 et un procédé d'obtention de ceux-ci.

Actuellement, les couvercles de boîtes alimentaires dites à ouverture facile sont généralement constitués d'un métal recouvert sur le côté intérieur par un vernis protecteur, évitant le contact direct des aliments contre le couvercle métallique et préservant ainsi les phénomènes de corrosion et/ou contamination correspondants, respectivement du couvercle et/ou du contenu.

Ces couvercles, comme cela est connu sont pré-incisés généralement par poinçonnage, côté métal (sur sa face externe), selon le dessin de la ligne de déchirure souhaitée lors de l'arrachage de la partie (ou totalité) du couvercle correspondant à l'ouverture prévue (voir par exemple EP-A-065 417).

On sait aussi qu'on a tenté de remplacer le vernis par une matière plastique thermo-plastique polyoléfinique (PE, PP) mais celle-ci se déforme de façon importante au niveau de la déchirure, donnant naissance à des défauts dénommés "feathering" (en anglais) caractérisés en ce que la coupe en travers de la déchirure a un profil en escalier. La largeur maximum tolérée d'allongement du film au niveau de la déchirure est de 0,5 mm.

La demanderesse a cherché à éviter ce défaut ; elle a trouvé que pour obtenir une déchirure franche, c'est-à-dire sensiblement rectiligne dans le sens de l'épaisseur, le couvercle devait présenter au droit de la préincision du métal, et conformément à la revendication 1, une "préincision" de la matière plastique, sous forme d'une dépression continue. Celle-ci doit laisser substituer, dans sa dimension la plus faible, une épaisseur du film plastique d'au moins 2 µm et de préférence d'au moins 5 µm, en vue de prévenir la corrosion du métal.

La nature de la matière plastique utilisée qui est collée ou thermocollée contre le métal est une polyoléfine, un polyamide ou un polyester thermo-rétractable, et de préférence un polyéthylène ou un polypropylène ou leurs copolymères ou leurs mélanges, de préférence orientés ou bi-orientés, dont l'épaisseur est comprise entre 10 et 100 µm. L'utilisation du polypropylène bi-orienté donne les meilleurs résultats. Le métal utilisé est généralement un alliage d'Al des séries 5000 ou 3000 selon les désignations de l'Aluminium Association, en particulier l'alliage 5052 état H19 de 230 à 330 µm d'épaisseur.

La largeur du sillon présent dans la matière plastique peut aller jusqu'à 150 µm, cette distance étant mesurée soit entre les sommets des crêtes qui bordent le sillon, soit entre les bords de la dépression au niveau de la surface libre du film de matière plastique. Au delà de cette valeur,l'élargissement du sillon n'est plus utile et d'autre part on a le risque de ne pas tenir la valeur minimale d'épaisseur du film plastique au fond dudit sillon.

Le sillon dans le film thermo-plastique est obtenu par l'utilisation d'une source de chaleur concentrée, sensiblement ponctuelle, déplacée de façon continue selon la ligne de déchirure désirée, les paramètres de fonctionnement étant réglés de façon à obtenir les caractéristiques dimensionnelles du sillon mentionnées ci-dessus.

Cette source de chaleur concentrée est, de préférence, obtenue au moyen d'un faisceau de radiations focalisées tel que celles d'une lampe à arc, ou à incandescence, ou mieux celle d'un faisceau laser continu.

Bien sûr, le déplacement de cette source concentrée de chaleur peut être asservi en déplacement (coordonnées x, y parallèles au plan du couvercle) et/ou en rotation autour d'un axe (perpendiculaire au plan du couvercle), de manière à suivre le contour de préincision voulu, à une vitesse déterminée.

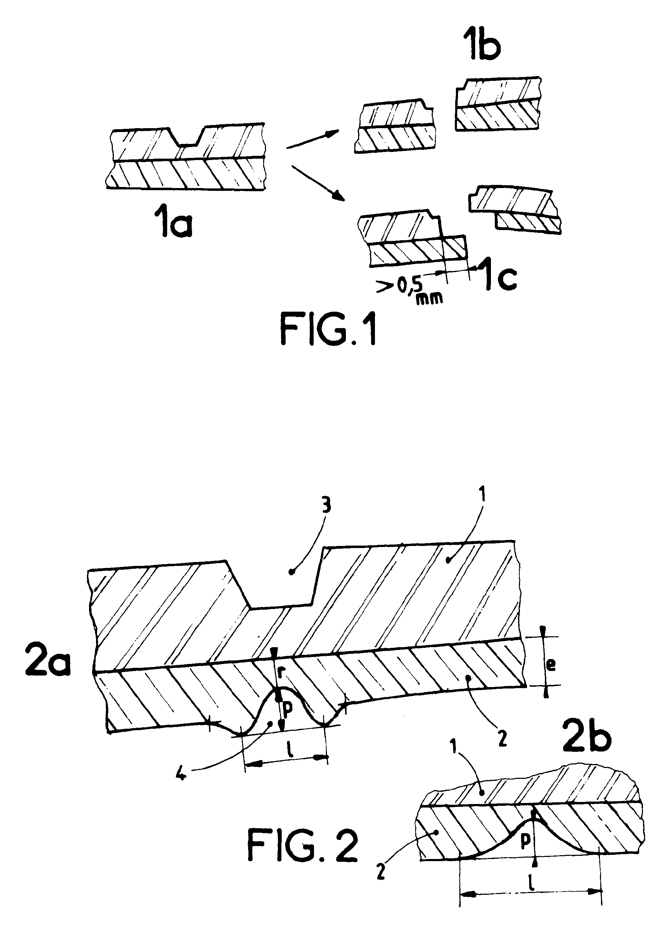

L'invention sera mieux comprise à l'aide de l'exemple suivant illustré par les figures 1 et 2.

La figure 1 représente une rupture par cisaillement du complexe métal-plastique, la figure 1 a représentant l'état initial, la figure 1 b une rupture qualifiée de bonne et la figure 1 c une rupture qualifiée de mauvaise.

La figure 2 représente une coupe transversale d'un couvercle selon l'invention, au droit du sillon,celui-ci pouvant avoir deux profils différents (fig: 2a ou 2b).

Le couvercle selon l'invention comporte donc un complexe métal-plastique, constitué d'une couche métallique 1 collée ou thermocollée sur un film plastique 2 thermo-rétractable, le couvercle comportant du côté externe une préincision "mécanique" 3, ici de forme trapézoïdale et le film plastique d'épaisseur e comportant du côté interne une préincision "thermique" 4, au droit de la préincision 3. Cette préincision 4 présente une largeur 1 et une profondeur p, l'épaisseur résiduelle étant r.

### EXEMPLE 1

Sur un couvercle composé d'un alliage 5052 de 220 µm d'épaisseur à l'état H 19 comportant une préincision trapézoïdale dont les dimensions sont les suivantes :
- petite base: : 50 µm
- grande base: : 100 µm
- hauteur: : 150 µm

on a collé avec un adhésif "Solvent-less": Liofol 7750 de la Société HENKEL, un film de polypropylène biorienté de 15 µm d'épaisseur (fournisseur : BOLLORE, référence : BOLPHANE - BF 13)

La préincision thermique du film a été réalisée avec un faisceau laser à CO2 (λ = 10,6 µm) de 20 W, déplacé à la vitesse de 300 m/min, la tache de focalisation ayant un diamètre de 100 µm au niveau de la surface du film, la distance focale étant de 50 mm sur un appareil de la société CILAS, laser à CO2, 50 W à puissance variable. Le sillon obtenu a les caractéristiques suivantes :
- profondeur p: : 10 µm
- largeur l: : 150 µm
- épaisseur résiduelle r: : 5 µm

La continuité du film au droit du sillon laser a été testée par le test au CuSO4 avec ou sans post-cuisson de conditionnement et stérilisation de 1 h à 120°C; aucune porosité n'a été observée.

Ce test consiste à immerger ou à enduire l'échantillon d'une solution aqueuse contenant 10 g de sulfate de Cu et 50 cm³ d'acide chlorhydrique (d = 1,18) au litre, à la température ambiante pendant 10 min.On observe et on dénombre à l'oeil nu les points noirs formés, qui correspondent aux porosités éventuelles du film plastique.

Le procédé selon l'invention permet donc d'éviter le défaut de "feathering" et de plus, on pense que l'incision thermique permet de renforcer localement l'adhésion du film plastique sur le métal au droit de celle-ci, ce qui en améliore la déchirabilité.

Les produits selon l'invention sont aussi meilleur marché que ceux comportant un vernis, d'où un avantage économique important, et le film plastique présente une meilleure résistance à la corrosion que le vernis.

## Revendications

1. Couvercle de boîte à ouverture facile composé d'une feuille métallique (1) et d'un film de matière plastique (2) comportant une préincision mécanique (3) de la feuille métallique, côté externe caractérisé en ce que le film plastique thermo-rétractable présente une dépression continue (4) sur sa face interne au droit de la préincision mécanique.

2. Couvercle selon la revendication 1, caractérisé en ce que le film plastique (2) est constitué d'une polyoléfine, d'un polyamide ou d'un polyester thermo-rétractable.

3. Couvercle selon la revendication 2, caractérisé en ce que la matière plastique (2) est constituée d'un polypropylène biétiré.

4. Couvercle selon l'une des revendications 1 à 3 caractérisé en ce que l'épaisseur (e) du film (2) est comprise entre 10 et 100 µm.

5. Couvercle selon l'une des revendications 1 à 4 caractérisé en ce que l'épaisseur résiduelle (r) du film plastique (2) au niveau de la dépression (4) est supérieure ou égale à 2 µm.

6. Couvercle selon la revendication 5 caractérisé en ce que l'épaisseur résiduelle (r) du film plastique (2) est supérieure ou égale à 5 µm.

7. Couvercle selon l'une des revendications 1 à 5 caractérisé en ce que la largeur (l) de la dépression est inférieure ou égale à 150 µm.

8. Couvercle selon l'une des revendications 1 à 7 caractérisé en ce que la feuille métallique est constituée par un alliage d' AI des séries 5000 ou 3000.

9. Procédé d'obtention d'un couvercle suivant l'une des revendications 1 à 7 caractérisé en ce que la dépression (4) est obtenue par une source de chaleur concentrée.

10. Procédé selon la revendication 8 caractérisé en ce que la source de chaleur concentrée est un faisceau laser.

## Patentansprüche

1. Dosendeckel zum leichten Öffnen, der aus einer metallischen Folie (1) und einem Kunststoffilm (2) zusammengesetzt ist und eine mechanische Vorkerbung (3) der metallischen Folie an der Außenseite aufweist, dadurch gekennzeichnet, daß der wärmeschrumpfbare Kunststoffilm eine durchlaufende Mulde auf seiner Innenfläche im Bereich der mechanischen Vorkerbung aufweist.

2. Deckel nach dem Anspruch 1, dadurch gekennzeichnet, daß der Kunststoffilm (2) aus einem wärmeschrumpfbaren Polyolefin, Polyamid oder Polyester besteht.

3. Deckel nach dem Anspruch 2, dadurch gekennzeichnet, daß der Kunststoff (2) aus einem doppelt gereckten Polypropylen besteht.

4. Deckel nach einem der Ansprüche 1 bis 3, dadurch gekennzeichnet, daß die Dicke (e) des Films (2) im Bereich von 10 bis 100 µm ist.

5. Deckel nach einem der Ansprüche 1 bis 4, dadurch gekennzeichnet, daß die Restdicke (r) des Kunststoffilms (2) im Bereich der Mulde (4) über oder gleich 2 µm ist.

6. Deckel nach dem Anspruch 5, dadurch gekennzeichnet, daß die Restdicke (r) des Kunststoffilms (2) über oder gleich 5 µm ist.

7. Deckel nach einem der Ansprüche 1 bis 5, dadurch gekennzeichnet, daß die Breite (l) der Mulde unter oder gleich 150 µm ist.

8. Deckel nach einem der Ansprüche 1 bis 7, dadurch gekennzeichnet, daß die metallische Folie aus einer Al-Legierung der Serien 5000 oder 3000 besteht.

9. Verfahren zur Herstellung eines Deckels nach einem der Ansprüche 1 bis 7, dadurch gekennzeichnet, daß die Mulde (4) durch eine konzentrierte Wärmequelle erhalten wird.

10. Verfahren nach dem Anspruch 9, dadurch gekennzeichnet, daß die konzentrierte Wärmequelle ein Laserbündel ist.

## Claims

1. A lid for an easy-opening can and consisting of a metal film (1) and a plastics film (2) comprising a mechanical pre-incision (3) of the metal foil on the outside face, characterised in that the heat-shrinkable plastics film has a continuous depression (4) on its inner surface at right-angles to the mechanical pre-incision.

2. A lid according to claim 1, characterised in that the plastics film (2) consists of a heat-shrinkable polyolefin, polyamide or polyester.

3. A lid according to claim 2, characterised in that the plastics material (2) consists of a bi-orientated polypropylene.

4. A lid according to one of claims 1 to 3, characterised in that the thickness e of the film (2) is comprised between 10 and 100 µm.

5. A lid according to one of claims 1 to 4, characterised in that the residual thickness r of the plastics film (2) at the position of the depression (4) is greater than or equal to 2 µm.

6. A lid according to claim 5, characterised in that the residual thickness r of the plastics film (2) is greater than or equal to 5 µm.

7. A lid according to one of claims 1 to 5, characterised in that the width (l) of the depression is less than or equal to 150 µm.

8. A lid according to one of claims 1 to 7, characterised in that the metal foil consists of an Al alloy of the series 5000 or 3000.

9. A method of producing a lid according to one of claims 1 to 7, characterised in that the depression (4) is obtained by a source of concentrated heat.

10. A method according to claim 8, characterised in that the concentrated heat source is a laser beam.
